# EUROPEAN PATENT APPLICATION

(11) **EP 1 657 625 A2**
(43) Date of publication of application: **17.05.2006**
(21) Application number: 05024704.8
(22) Date of filing: 11.11.2005
(51) Int. Cl.: G06F 3/023

(54) **Text entry for mobile station**

(30) Priority: 12.11.2004 KR 2004092628
(71) Applicant: LG Electronics Inc., Yongdungpo-gu Seoul (KR)
(72) Inventor: Lee, Ji-Min, Gyeonggi-do (KR)
(74) Representative: Katérle, Axel

(57) **Abstract**

A data input method in a mobile station comprises receiving first character input for a first word, the first character input for the first word associated with a first character of the first word. The method also comprises receiving total character input for the first word, the total character input for the first word associated with a total number of characters in the first word. The method also comprises searching a memory in the mobile station for a first stored word based on the first character input for the first word and the total character input for the first word. The method may further comprise displaying first word results and receiving a first user word selection based on displayed first word results.

## Description

### FIELD OF THE INVENTION

The present invention relates generally to a mobile station and, more particularly, to text entry for a mobile station.

### BACKGROUND OF THE INVENTION

In order for users to input text (e.g., characters and/or numerals) required for data communications using a mobile station, a keypad is used. The characters may include English Korean, Chinese, or other language characters, as well as special characters.

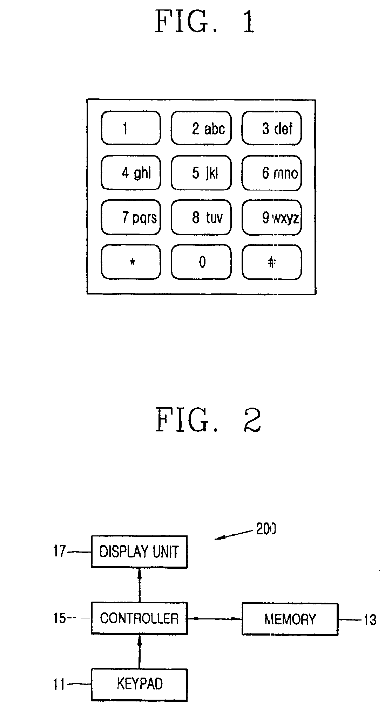

Fig. 1 is a diagram illustrating a mobile station keypad, according to a related art.

Referring to Fig. 1, in the keypad, a plurality of alphabetic characters are allocated to each numeral key. As shown in Fig. 1, no alphabetic characters are allocated to the 0-key or the 1-key, while the 2-key includes "a, b, c", the 3-key includes "d, e, f", the 4-key includes "g, h, i", the 5-key includes "j, k, I", the 6-key includes "m, n, o", the 7-key includes "p, q, r, s", the 8-key includes "t, u, v" and the 9-key includes "w, x, y, z".

To input text (e.g., alphabetic characters) using the keypad, the user repeatedly presses (e.g., taps) the same numeral key several times until the desired character is displayed. This procedure is commonly referred to as a multi-tap (or multi-press) text entry method.

For example, to input the word "happy", the user presses the 4-key two times to input "h", the 2-key one time to input "a", and the 7-key one time to input "p". Thereafter, by pressing a shift key (or other navigation key) to move the cursor, or after a certain time duration elapses (e.g., the cursor automatically moves to the next position after one second), the user presses the 7-key one time to input "p", and finally presses the 9-key three times to input "y". Thus, the user must perform a total of eight or nine key taps to input the word "happy", a word having only five letters.

The multi-tap text entry method has several disadvantages. First, the same key must be repeatedly tapped to enter a single character. Second, the user must move the cursor, or wait a set time period, to consecutively enter the same character. Third, frequently used words, phrases, and sentences are not stored for future use.

### SUMMARY OF THE INVENTION

Accordingly, the present invention is directed to text entry for a mobile station that substantially obviates one or more problems due to limitations and disadvantages of the related art.

An object of the present invention is to provide for entering and retrieving frequently used words, phrases and/or sentences from a glossary in a mobile station to minimize keystrokes.

Another object of the present invention is to reduce inconveniences associated with moving a cursor to a next position when the same character must be sequentially inputted.

Still another object of the present invention is to provide for storing frequently used words, phrases and/or sentences into a memory to generate a glossary in a mobile station.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, in one embodiment, a data input method in a mobile station comprises receiving first character input for a first word, the first character input for the first word associated with a first character of the first word. The method also comprises receiving total character input for the first word, the total character input for the first word associated with a total number of characters in the first word. The method also comprises searching a memory in the mobile station for a first stored word based on the first character input for the first word and the total character input for the first word.

The method may further comprise displaying first word results based on the searching of the memory in the mobile station for the first stored word based on the first character input for the first word and the total character input for the first word. The method may further comprise receiving a first user word selection based on displayed first word results.

The method may further comprise receiving word separation input to indicate a separation between the first word and a second word. The method may further comprise receiving first character input for the second word, the first character input for the second word associated with a first character of the second word. The method may further comprise receiving total character input for the second word, the total character input for the second word associated with a total number of characters in the second word. The method may further comprise searching a memory in the mobile station for a second stored word based on the first character input for the second word and the total character input for the second word.

The method may further comprise displaying second word results based on the searching of the memory in the mobile station for the second stored word based on the first character input for the second word and the total character input for the second word. The method may further comprise receiving a second user word selection based on displayed second word results. The method may further comprise receiving phrase end input to indicate an end of a phrase, the phrase including the first word and the second word. The first and second stored words may be stored to the memory by a user.

In another embodiment, a data input method in a mobile station comprises receiving first character input for a first word, the first character input for the first word associated with a first character of the first word. The method also comprises receiving total character input for the first word, the total character input for the first word associated with a total number of characters in the first word. The method also comprises receiving word separation input to indicate a separation between the first word and a second word. The method also comprises receiving first character input for the second word, the first character input for the second word associated with a first character of the second word. The method also comprises receiving total character input for the second word, the total character input for the second word associated with a total number of characters in the second word. The method also comprises searching a memory in the mobile station for first and second stored words based on the first character input for the first word and the total character input for the first word, and the first character input for the second word and the total character input for the second word, respectively.

The method may further comprise displaying phrase results based on the searching of the memory in the mobile station for the first and second stored words based on the first character input for the first word and the total character input for the first word, and the first character input for the second word and the total character input for the second word, respectively, wherein the phrase results include at least two words that match the first character input for the first word and the total character input for the first word, and the first character input for the second word and the total character input for the second word, respectively. The method may further comprise receiving a user phrase selection based on displayed phrase results. The method may further comprise searching the memory in the mobile station for first and second stored words, independently, based on the first character input for the first word and the total character input for the first word, and the first character input for the second word and the total character input for the second word, respectively, when the searching of the memory in the mobile station for the first and second stored words yields no phrase results. The method may further comprise receiving phrase end input to indicate an end of a phrase, the phrase including the first word and the second word.

In yet another embodiment, a data input apparatus in a mobile station comprises a keypad adapted to receive user input, and a memory operatively coupled to the keypad, adapted to store words. The data input apparatus also includes a controller operatively coupled to the keypad and the memory, adapted to receive first character input for a first word based on the user input, the first character input for the first word associated with a first character of the first word, and to receive total character input for the first word based on the user input, the total character input for the first word associated with a total number of characters in the first word, and to search the memory for a first stored word based on the first character input for the first word and the total character input for the first word.

The data input apparatus may also comprise a display unit operatively coupled to the controller, adapted to display first word results based on the searching of the memory for the first stored word based on the first character input for the first word and the total character input for the first word. The controller may further receive word separation input to indicate a separation between the first word and a second word, first character input for the second word, the first character input for the second word associated with a first character of the second word, total character input for the second word, the total character input for the second word associated with a total number of characters in the second word, and the controller may further search the memory for a second stored word based on the first character input for the second word and the total character input for the second word. The controller may further receive phrase end input to indicate an end of a phrase, the phrase including the first word and the second word.

The foregoing and other objects, features, aspects and advantages of the present invention will become more apparent from the following detailed description of the present invention when taken in conjunction with the accompanying drawings. It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principles of the invention.

Fig. 1 is a diagram illustrating a mobile station keypad, according to a related art.

Fig. 2 is a block diagram illustrating a mobile station, according to an embodiment of the present invention.

Fig. 3 is a flow diagram illustrating a glossary registering method in a mobile station, according to an embodiment of the present invention.

Figs. 4A and 4B are flow diagrams illustrating a glossary inputting method in a mobile station, according to embodiments of the present invention.

### DETAILED DESCRIPTION OF THE PREFERRED EMBODIMENTS

Reference will now be made in detail to the preferred embodiments of the present invention, examples of which are illustrated in the accompanying drawings. Wherever possible, the same reference numbers will be used throughout the drawings to refer to the same or like parts.

A mobile station including a 'glossary' of frequently used words, phrases, and/or sentences is disclosed. To store to the glossary, a user may initially input a word, phrase, or sentence in a word-by-word format, for example, by pressing a 'word dividing key' after each word to indicate a separation between words. Alternatively, words, phrases, and/or sentences may be pre-stored to the glossary by the mobile station manufacturer. Each phrase or sentence may contain two or more words. Words may be stored in a memory according to the first letter of the word and/or according to the total number of letters in the word. The term 'letter' is used interchangeably with the term 'character'. A character may be an English alphabetic letter, a Korean sound symbol, a number, or a special character, for example.

To enter a phrase or sentence using the 'glossary' function, the user may tap the keys corresponding to the first letters of each word in a desired phrase or sentence. Between the key taps for the first letters of each word, the word dividing (word separation) key is pressed to indicate a separation between words. The first letter inputs and the word dividing key inputs are then recognized and a glossary search is performed. Matches between the first letter inputs/word dividing key inputs and words stored in the glossary may then be displayed to enable the user to review and select desired word(s).

Fig. 2 is a block diagram illustrating a mobile station 200, according to an embodiment of the present invention.

Referring to Fig. 2, the mobile station 200 includes a keypad 11 having a plurality of keys to allow input of numbers and characters, a memory 13 for storing words in a glossary. The mobile station 200 also includes a controller 15 for controlling storage of words to the glossary, searching of the glossary, and input of the prepared glossaries by the user. The mobile station also includes a display unit 17 for displaying messages during character input, glossary search, and/or other operational modes, according to the control of the controller 15.

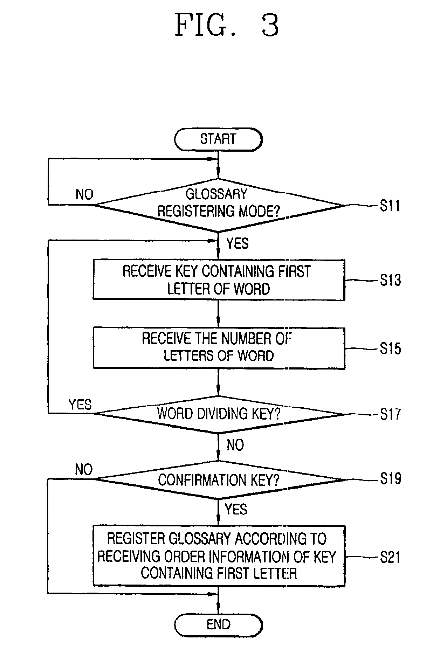

Fig. 3 is a flow diagram illustrating a glossary registering method in a mobile station, according to an embodiment of the present invention.

Referring to Figs. 2 and 3, the controller 15 of the mobile station determines whether the mobile station is in glossary registering mode (S11). In the glossary registering mode, words, phrases, and/or sentences may be stored to the memory 13. If the mobile station is in the glossary registering mode, the controller 15 separates each word of an inputted phrase or sentence (e.g., using a word dividing key). Words may then be recognized based on the first letters of the words and/or the number of letters in each word (S13 to S21).

For example, the controller 15 may recognize a key that includes the first letter of a first word in an inputted phrase (S13). The controller may also recognize the number of letters in the first word (S15). By recognizing the first letter and the total number of letters in the first word, the controller 15 may thusly recognize the first word. Then, the controller 15 determines whether a word dividing key was asserted next to the recognized first word (S17). If a word dividing key was asserted, the controller 15 performs step S13. That is, the controller 15 recognizes a key containing the first letter of a next word in the inputted phrase (S13), as well as the number of letters of the next word (S15). Thus, the next word may also be recognized. Steps S13 to S15 may then be repeated for all of the words in the inputted phrase. When a confirmation key that signals the end of the inputted phrase is recognized (S19), the controller 15 registers the phrase in the memory 13 (S21).

For example, to register the phrase "happy birthday to you" to the memory 13, keys may be tapped in the following order: the 4-key containing a first letter "h" of "happy", the word dividing key (e.g., the 0-key), the 2-key containing a first letter "b" of "birthday", the word dividing key, the 8-key containing a first letter "t" of "to", the word dividing key, and the 9-key containing a first letter "y" of "you". With a typical keypad, this process would require tapping the 4-key twice to enter "h", the 2-key twice to enter "b", the 8-key once to enter "t", and the 9-key three times to enter "y".

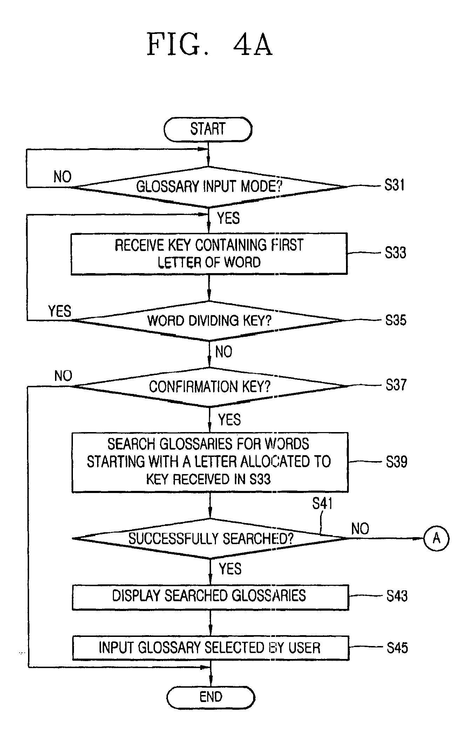

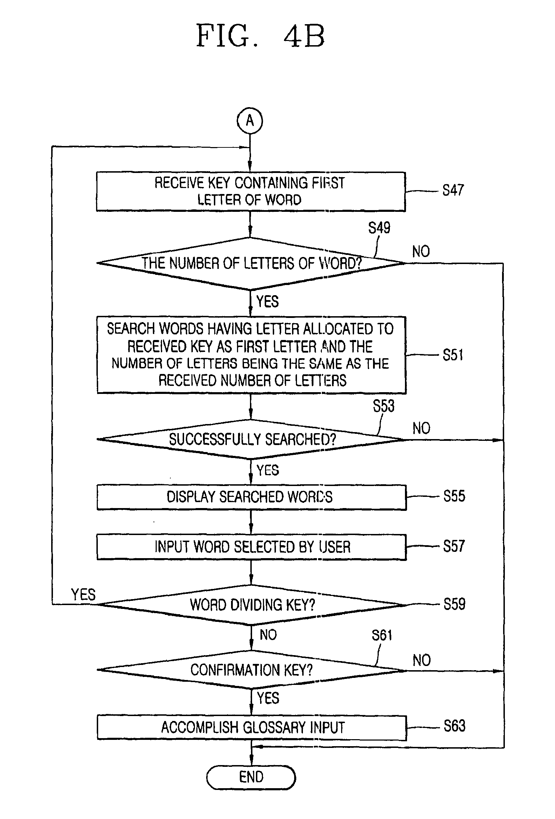

Figs. 4A and 4B are flow diagrams illustrating a glossary inputting method in a mobile station, according to embodiments of the present invention.

Referring to Fig. 4A, the user sets a character input mode of the mobile station to phrase input mode (S31). After the phrase input mode is set, the user may tap keys containing first letters of each word in the desired phrase, as well as a word dividing key between words (S33 and S35). The user may also press a confirmation key to search the glossary (S37).

After the confirmation key is tapped to search the glossary, the controller 15 searches the memory 13 for the desired phrase, based on the input received at steps S33 and S35 (S39). A list of matching phrases may then be displayed on the display unit 17 (S41 and S43). The user may then select the desired phrase from among the displayed matching phrases by, for example, a scrolling operation (S45).

For example, when the controller 15 searches the memory 13 for the phrase "happy birthday to you", the search attempts to find a first word starting with "g", "h", or "i" (e.g., the letters allocated to the 4-key), a second word starting with "a", "b", or "c" (e.g., the letters allocated to the 2-key), a third word starting with "t", "u", or "v" (e.g., the letters allocated to the 8-key), and a fourth word starting with "x", "y", or "z" (e.g., the letters allocated to the 9-key). The controller 15 displays matching phrases on the display unit 17 and the user may select the desired phrase.

Referring to Fig. 4B, alternatively, if the phrase is not found as a result of the search, the user may search for each word in the phrase individually. The user may thus tap a key containing the first letter of the first word of the phrase, and then may input the total number of letters in the first word (S47 and S49). The controller 15 then searches the memory 13 for words that match the parameters input at steps S47 and S49 (S51).

After the search is executed (S53), the controller 15 may display matching words on the display unit 17 (S55). Words that are used more frequently and/or words that have been preferentially stored by the user may be preferentially displayed (e.g., displayed on top) on the display unit 17, for example. The user may then select the desired word from among the displayed words (S57).

The user may then press the word dividing key (S59), and tap a key containing the first letter of the second word and the total number of letters in the second word (S47 and S49), to search for the second word and steps S47-S59 may be repeated for the second word and later words. The confirmation key may be pressed and the phrase may thusly be composed (S61 and S63).

For example, to individually search for each word of the phrase "happy birthday to you", the user first inputs the 4-key containing the first letter "h" of the first word "happy" and "5" corresponding the total number of letters of "happy". The controller 15 then searches the memory 13 for words that start with "g", "h", and "i" allocated to the 4-key and include five letters. If words such as "group", "happy" and "incur" exist in the memory 13, the controller 15 displays the words "group", "happy" and "incur" on the display unit 17. The user may then select the desired word from the displayed words. After selecting the first word of the phrase, the user inputs the word dividing word key, and then inputs the 2-key containing the first letter "b" of the second word "birthday" and "8" corresponding to the total number of letters of "birthday" to search for the second word "birthday". These steps may be repeated to compose the desired phrase.

When inputting a new glossary phrase by the word searching method according to the present invention or inputting the new glossary phrase by a typical character inputting method, and then registering the inputted new glossary phrase in the memory 13, the user sets the mobile station as a glossary phrase registering mode, and thus the glossary phrase is registered in the mobile station.

An apparatus for text entry may comprise a display unit to display information to a user, an input unit to allow the user to enter text and other information, a memory to store a plurality of words, and a controller to control the display unit, the input unit, and the memory to perform the steps of receiving one or more text entries from the user, each text entry representing a first initial text character of each word in a desired phrase containing one or more words, receiving additional information for each word from the user after each text entry, searching the memory to find any words that match the text entries and the additional information received from the user, displaying one or more words that are found to match as a result of the searching, and allowing the user to select from the displayed word or words to thus input the desired phrase.

The additional information received from the user may indicate an end of a word. The end of the word indication allows distinction between adjacent words contained in the phrase. The searching may be performed by checking all stored words that begin with the first initial text character. The additional information received from the user may also indicate a total number of text characters in the word. The searching may be performed by checking all stored words that begin with the first initial text character and have the same total number of text characters. The additional information received from the user may be inputted by the user upon selecting a number key button, for example.

In one embodiment, a data input method in a mobile station comprises receiving first character input for a first word, the first character input for the first word associated with a first character of the first word. The method also comprises receiving total character input for the first word, the total character input for the first word associated with a total number of characters in the first word. The method also comprises searching a memory in the mobile station for a first stored word based on the first character input for the first word and the total character input for the first word.

The method may further comprise displaying first word results based on the searching of the memory in the mobile station for the first stored word based on the first character input for the first word and the total character input for the first word. The method may further comprise receiving a first user word selection based on displayed first word results.

The method may further comprise receiving word separation input to indicate a separation between the first word and a second word. The method may further comprise receiving first character input for the second word, the first character input for the second word associated with a first character of the second word. The method may further comprise receiving total character input for the second word, the total character input for the second word associated with a total number of characters in the second word. The method may further comprise searching a memory in the mobile station for a second stored word based on the first character input for the second word and the total character input for the second word.

The method may further comprise displaying second word results based on the searching of the memory in the mobile station for the second stored word based on the first character input for the second word and the total character input for the second word. The method may further comprise receiving a second user word selection based on displayed second word results. The method may further comprise receiving phrase end input to indicate an end of a phrase, the phrase including the first word and the second word. The first and second stored words may be stored to the memory by a user.

In another embodiment, a data input method in a mobile station comprises receiving first character input for a first word, the first character input for the first word associated with a first character of the first word. The method also comprises receiving total character input for the first word, the total character input for the first word associated with a total number of characters in the first word. The method also comprises receiving word separation input to indicate a separation between the first word and a second word. The method also comprises receiving first character input for the second word, the first character input for the second word associated with a first character of the second word. The method also comprises receiving total character input for the second word, the total character input for the second word associated with a total number of characters in the second word. The method also comprises searching a memory in the mobile station for first and second stored words based on the first character input for the first word and the total character input for the first word, and the first character input for the second word and the total character input for the second word, respectively.

The method may further comprise displaying phrase results based on the searching of the memory in the mobile station for the first and second stored words based on the first character input for the first word and the total character input for the first word, and the first character input for the second word and the total character input for the second word, respectively, wherein the phrase results include at least two words that match the first character input for the first word and the total character input for the first word, and the first character input for the second word and the total character input for the second word, respectively. The method may further comprise receiving a user phrase selection based on displayed phrase results. The method may further comprise searching the memory in the mobile station for first and second stored words, independently, based on the first character input for the first word and the total character input for the first word, and the first character input for the second word and the total character input for the second word, respectively, when the searching of the memory in the mobile station for the first and second stored words yields no phrase results. The method may further comprise receiving phrase end input to indicate an end of a phrase, the phrase including the first word and the second word.

In yet another embodiment, a data input apparatus in a mobile station comprises a keypad adapted to receive user input, and a memory operatively coupled to the keypad, adapted to store words. The data input apparatus also includes a controller operatively coupled to the keypad and the memory, adapted to receive first character input for a first word based on the user input, the first character input for the first word associated with a first character of the first word, and to receive total character input for the first word based on the user input, the total character input for the first word associated with a total number of characters in the first word, and to search the memory for a first stored word based on the first character input for the first word and the total character input for the first word.

The data input apparatus may also comprise a display unit operatively coupled to the controller, adapted to display first word results based on the searching of the memory for the first stored word based on the first character input for the first word and the total character input for the first word. The controller may further receive word separation input to indicate a separation between the first word and a second word, first character input for the second word, the first character input for the second word associated with a first character of the second word, total character input for the second word, the total character input for the second word associated with a total number of characters in the second word, and the controller may further search the memory for a second stored word based on the first character input for the second word and the total character input for the second word. The controller may further receive phrase end input to indicate an end of a phrase, the phrase including the first word and the second word.

In the present invention, a glossary is used in conjunction with a mobile station to simplify text/data input for the user. Frequently used words, phrases, and/or sentences may be quickly stored and recalled, thereby enhancing user convenience.

It will be apparent to those skilled in the art that various modifications and variations may be made in the present invention without departing from the spirit or scope of the inventions. Thus, it is intended that the present invention covers the modifications and variations of this invention provided they come within the scope of the appended claims and their equivalents.

## Claims

1. A data input method in a mobile station, the method comprising:
receiving first character input for a first word, the first character input for the first word associated with a first character of the first word;
receiving total character input for the first word, the total character input for the first word associated with a total number of characters in the first word; and
searching a memory in the mobile station for a first stored word based on the first character input for the first word and the total character input for the first word.

2. The data input method of claim 1, further comprising:
displaying first word results based on the searching of the memory in the mobile station for the first stored word based on the first character input for the first word and the total character input for the first word.

3. The data input method of claim 2, further comprising:
receiving a first user word selection based on displayed first word results.

4. The data input method of claim 1, further comprising:
receiving word separation input to indicate a separation between the first word and a second word;
receiving first character input for the second word, the first character input for the second word associated with a first character of the second word;
receiving total character input for the second word, the total character input for the second word associated with a total number of characters in the second word; and
searching a memory in the mobile station for a second stored word based on the first character input for the second word and the total character input for the second word.

5. The data input method of claim 4, further comprising:
displaying second word results based on the searching of the memory in the mobile station for the second stored word based on the first character input for the second word and the total character input for the second word.

6. The data input method of claim 5, further comprising:
receiving a second user word selection based on displayed second word results.

7. The data input method of claim 6, further comprising:
receiving phrase end input to indicate an end of a phrase, the phrase including the first word and the second word.

8. The data input method of claim 4, wherein the first and second stored words are stored to the memory by a user.

9. A data input method in a mobile station, the method comprising:
receiving first character input for a first word, the first character input for the first word associated with a first character of the first word;
receiving total character input for the first word, the total character input for the first word associated with a total number of characters in the first word;
receiving word separation input to indicate a separation between the first word and a second word;
receiving first character input for the second word, the first character input for the second word associated with a first character of the second word;
receiving total character input for the second word, the total character input for the second word associated with a total number of characters in the second word; and
searching a memory in the mobile station for first and second stored words based on the first character input for the first word and the total character input for the first word, and the first character input for the second word and
the total character input for the second word, respectively.

10. The data input method of claim 9, further comprising:
displaying phrase results based on the searching of the memory in the mobile station for the first and second stored words based on the first character input for the first word and the total character input for the first word, and the first character input for the second word and the total character input for the second word, respectively, wherein the phrase results include at least two words that match the first character input for the first word and the total character input for the first word, and the first character input for the second word and the total character input for the second word, respectively.

11. The data input method of claim 10, further comprising:
receiving a user phrase selection based on displayed phrase results.

12. The data input method of claim 10, further comprising:
searching the memory in the mobile station for first and second stored words, independently, based on the first character input for the first word and the total character input for the first word, and the first character input for the second word and the total character input for the second word, respectively, when the searching of the memory in the mobile station for the first and second stored words yields no phrase results.

13. The data input method of claim 9, further comprising:
receiving phrase end input to indicate an end of a phrase, the phrase including the first word and the second word.

14. The data input method of claim 9, wherein the first and second stored words are stored to the memory by a user.

15. A data input apparatus in a mobile station, the data input apparatus comprising:
means for receiving first character input for a first word, the first character input for the first word associated with a first character of the first word;
means for receiving total character input for the first word, the total character input for the first word associated with a total number of characters in the first word; and
means for searching a memory in the mobile station for a first stored word based on the first character input for the first word and the total character input for the first word.

16. The data input apparatus of claim 15, further comprising:
means for displaying first word results based on the searching of the memory in the mobile station for the first stored word based on the first character input for the first word and the total character input for the first word.

17. The data input apparatus of claim 16, further comprising:
means for receiving a first user word selection based on displayed first word results.

18. The data input apparatus of claim 15, further comprising:
means for receiving word separation input to indicate a separation between the first word and a second word;
means for receiving first character input for the second word, the first character input for the second word associated with a first character of the second word;
means for receiving total character input for the second word, the total character input for the second word associated with a total number of characters in the second word; and
means for searching a memory in the mobile station for a second stored word based on the first character input for the second word and the total character input for the second word.

19. The data input apparatus of claim 18, further comprising:
means for displaying second word results based on the searching of the memory in the mobile station for the second stored word based on the first character input for the second word and the total character input for the second word.

20. The data input apparatus of claim 19, further comprising:
means for receiving a second user word selection based on displayed second word results.

21. The data input apparatus of claim 20, further comprising:
means for receiving phrase end input to indicate an end of a phrase, the phrase including the first word and the second word.

22. The data input apparatus of claim 18, wherein the first and second stored words are stored to the memory by a user.

23. A data input apparatus in a mobile station, the data input apparatus comprising:
a keypad adapted to receive user input;
a memory operatively coupled to the keypad, adapted to store words;
a controller operatively coupled to the keypad and the memory, adapted to receive first character input for a word based on the user input, the first character input for the word associated with a first character of the word, and to receive total character input for the word based on the user input, the total character input for the word associated with a total number of characters in the word, and to search the memory for a stored word based on the first character input for the word and the total character input for the word.

24. The data input apparatus of claim 23, further comprising:
a display unit operatively coupled to the controller, adapted to display word results based on the searching of the memory for the stored word based on the first character input for the word and the total character input for the word.

25. The data input apparatus of claim 23, wherein:
the controller further receives word separation input to indicate a separation between the word and a second word, first character input for the second word, the first character input for the second word associated with a first character of the second word, total character input for the second word, the total character input for the second word associated with a total number of characters in the second word, and wherein the controller further searches the memory for a second stored word based on the first character input for the second word and the total character input for the second word.

26. The data input apparatus of claim 25, wherein:
the controller further receives phrase end input to indicate an end of a phrase, the phrase including the word and the second word.

27. The data input apparatus of claim 25, wherein the stored word and the second stored word are stored to the memory by a user.
